# EUROPEAN PATENT APPLICATION

(11) **EP 2 578 375 A1**
(43) Date of publication of application: **10.04.2013**
(21) Application number: 11786293.8
(22) Date of filing: 17.05.2011
(51) Int. Cl.: B29C 45/44, F16B 19/00

(54) **CLIP, METHOD FOR PRODUCING CLIP, AND DEVICE FOR PRODUCING CLIP**

(30) Priority: 24.05.2010 JP 2010118531
(71) Applicant: Piolax Inc., Yokohama-shi, Kanagawa-ken 240-0023 (JP); Nissan Motor Co., Ltd, Yokohama-shi, Kanagawa 221-0023 (JP)
(72) Inventor: AOKI, Ryou, Yokohama-shi Kanagawa 240-0023 (JP); ARISAKA, Oomi, Yokohama-shi Kanagawa 240-0023 (JP); IRIE, Yoshiyuki, Yokohama-shi Kanagawa 240-0023 (JP); TAMURAYA, Makoto, Kanagawa 243-0123 (JP); SASAKI, Tomoaki, Kanagawa 243-0123 (JP)
(74) Representative: Grünecker, Kinkeldey, Stockmair & Schwanhäusser
(86) International application number: PCT/JP2011/002744
(87) International publication number: WO 2011/148589

(57) **Abstract**

A clip 1 according to an aspect has a head portion 2 that is engaged with an attachment-subject member, a leg portion 4 that is inserted and locked in an attachment hole of an attachment-base member to which the attachment-subject member is to be fixed, a shank portion 6 that connects the head portion 2 with the leg portion 4, and a flange portion 8 that spreads obliquely outwards from the shank portion 6 towards the leg portion 4 and is closely attached to the attachment-base member so that an outer circumferential edge portion of a leg-portion-4-facing surface of the flange portion 8 surrounds the attachment hole when attached to the attachment-base member. The head portion 2, the leg portion 4, the shank portion 6 and the flange portion 8 are formed integrally from a resin material through an injection molding using a plurality of molds, an annular parting line PL1 that extends along a boundary surface between the molds is formed on the leg-portion-4-facing surface of the flange portion 8. On the other hand, no other parting line is formed radially outwards of the annular parting line PL1.

## Description

### Technical Field

The present invention relates to a resin clip used to attach an attachment-subject member to an attachment-base member.

### Background Art

Conventionally, resin clips are widely used in attaching an attachment-subject member to an attachment-base member, such as in attaching an automotive interior component such as a trim board to a door panel. Generally, such clips have a head portion which is engaged with an attachment-subject member, a leg portion that is locked on an attachment-base member, a shank portion that connects the head portion with the leg portion and a flange portion that expands outwards from the shank portion. In attaching the clip to the attachment-base member, the leg portion is inserted into an attachment hole of the attachment-base member, thereby fixing the clip to the attachment-base member while holding the periphery of the attachment hole by the leg portion and the flange portion. By press attaching the flange portion to the attachment-base member so as to surround the attachment hole, it is possible to prevent the intrusion of foreign matters through the attachment hole.

Generally, such clips are mass-produced, and hence are formed from a resin material through an injection molding using dedicated molds (refer to Patent Literature 1, for example). A plurality of molds which are so-called split molds are used as the dedicated molds. As a mold configuration, the molds abut with each other to form a cavity corresponding to a clip to be produced. The molds abut in a direction at right angles to an axis of the clip (in a radial direction of a flange portion to be produced) so that the clip can be removed from the molds after the injection molding is completed.

### Related Art Literature

### Patent Literature

Patent Literature 1: JP-UM-S59-169419-A

### Summary of the Invention

### Problem that the Invention is to Solve

According to the above-described mold configuration, a parting line which is an uneven (projection) formed along a boundary between the molds is formed on a molded clip. Because of this, depending upon applications of the clip, this parting line causes a problem. For example, when the flow of water or air through an attachment hole of an attachment-base member needs to be prevented, a high sealing performance needs to be ensured by a flange portion. However, in the above-described mold configuration, the radial parting line is formed on a sealing surface of the flange portion. As a result, a void that establishes a communication between the outside and inside of the flange portion may be formed near the parting line. To ensure the high sealing performance, for example, a member such a packing may be separately provided between the attachment-base member and the flange portion. However, it is disadvantageous in production cost.

The invention has been made in view of these situations, and an object thereof is to provide a technique that enables the sealing of an attachment hole of an attachment-base member with a high sealing performance by a single clip.

### Means for Solving the Problem

With a view to solving the problem, according to an aspect of the invention, there is provided a clip including: a head portion that is engaged with an attachment-subject member; a leg portion that is inserted and locked in an attachment hole of an attachment-base member to which the attachment-subject member is to be fixed; a shank portion that connects the head portion with the leg portion; and a flange portion that expands obliquely outwards from the shank portion towards the leg portion. When attached to the attachment-base member, this clip is closely attached to the attachment-base member so that an outer circumferential edge portion of a leg-portion-facing surface of the flange portion surrounds the attachment hole. The head portion, the leg portion, the shank portion and the flange portion are formed integrally from a resin material through an injection molding using a plurality of molds, and an annular parting line that extends along a boundary surface between the molds is formed on the leg-portion-facing surface of the flange portion. On the other hand, no other parting line is formed radially outwards of the annular parting line.

According to this aspect, although the annular parting line is formed on the surface of the flange portion facing the attachment-base member, no other parting line is formed radially outwards of the annular parting line. The clip of this aspect is obtained by using the molds that form the annular parting line on the flange portion. In the flange portion, since no radially-extending parting line is formed outwards of the annular parting line, it is possible to ensure an annular sealing surface having a high sealing performance outwards of the annular parting line.

### Advantage of the Invention

According to the invention, it is possible to provide the technique that enables the sealing of the attachment hole of the attachment-base member with the high sealing performance by the single clip.

### Brief Description of the Drawings

Fig. 1 perspectively shows a clip according to a first embodiment.
Figs. 2A to 2F show the clip in detail.
Fig. 3 exemplarily shows a manufacturing apparatus of the clip.
Figs. 4A and 4B show a first mold from above.
Figs. 5A to 5C show a second mold.
Figs. 6A and 6B show the molds in whole.
Figs. 7A to 7C show an assembling process of the molds.
Figs. 8A and 8B show a clip formed by the manufacturing apparatus in detail.
Fig. 9 shows an application example of the clip.

### Mode for Carrying out the Invention

A clip according to an embodiment has a head portion that is engaged with an attachment-subject member, a leg portion that is inserted and locked in an attachment hole of an attachment-base member to which the attachment-subject member is to be fixed, a shank portion that connects the head portion with the leg portion and a flange portion that expands obliquely outwards from the shank portion towards the leg portion, and when attached to the attachment-base member, this clip is closely attached to the attachment-base member so that an outer circumferential edge portion of a leg-portion-facing surface of the flange portion surrounds the attachment hole. The head portion, the leg portion, the shank portion and the flange portion are formed integrally from a resin material through an injection molding using a plurality of molds, and an annular parting line that extends along a boundary surface between the molds is formed on the leg-portion-facing surface of the flange portion. On the other hand, no other parting line is formed radially outwards of the annular parting line.

This annular parting line lies at a predetermined distance radially inwards from an outer circumferential, edge of the flange portion. As a result, when the clip is attached to the attachment-base member, an annular sealing surface is formed between the outer circumferential edge of the flange portion and the parting line. The flange portion abuts with the attachment-base member in a fluid-tight fashion at the sealing surface. The "predetermined distance" for ensuring a sealing performance like this can be appropriately set through experiments or analyses and/or by taking into account the shapes and dimensions of the molds and the attachment hole. The parting line may preferably be formed further radially inwards of the flange portion than a limit value with which the sealing performance can be ensured.

Another radially-extending parting line may be formed inwards of the annular parting line on the leg-portion-facing surface of the flange portion. Namely, depending on the shape of the leg portion, split molds need to be used. In this embodiment, the radial parting line is formed by a boundary line of the split molds. In other words, the split molds can be appropriately used as long as no parting line attributed to the split molds is formed on the sealing surface of the flange portion. By so doing, the aforesaid high sealing performance can be ensured.

The clip can be manufactured by the following manufacturing apparatus. Namely, a clip manufacturing apparatus according to this embodiment forms the clip from a resin through injection molding and includes a first mold that forms a first surface of the clip corresponding to a head-portion-facing surface of the flange portion, a second mold that forms a second surface of the clip corresponding to the leg-portion-facing surface of the flange portion and a third mold that forms the leg portion. The second mold is configured as an integral mold including no divided portions and has an opening portion that is smaller than an outside diameter of the flange portion. A first-mold-facing surface of the second mold that lies outwards of the opening portion forms a predetermined range of the flange portion that extends inwards from the outer circumferential edge thereof.

According to this embodiment, the "predetermined range" that extends inwards from the outer circumferential edge of the flange portion is formed by the first-mold-facing surface of the second mold that lies outwards of the opening portion. Since the second mold has no divided portions, no radial parting line is formed within the predetermined range. In the above-described manufacturing apparatus, it is possible to form the sealing surface having the high sealing performance within the predetermined range by assembling together the first mold, the second mold and the third mold and injecting a resin material into a cavity formed by those molds.

The second mold and the third mold may form a continuous surface at a boundary therebetween by being assembled together so that a flange portion can be formed by the continuous surface and a surface of the first mold facing thereto, and a boundary line between the second mold and the third mold may be formed into an annular shape.

According to this embodiment, an annular parting line is formed along the boundary line on the continuous surface between the second mold and the third mold. In other words, the second mold and the third mold form the annular parting line.

Mating surfaces of the second mold and the third mold may be made obliquely relative to the continuous surface. The third mold may be made up of a plurality of dividable split molds, and the split molds may be assembled to the second mold so as to slide obliquely along the mating surfaces. By adopting this configuration, it is possible to realize the above-mentioned mold configuration specifically. By causing the third mold to slide obliquely, since the third mold can be assembled to the second mold through the sliding, the positioning of both the molds can be facilitated.

### [Embodiment]

Hereinafter, an embodiment of the invention will be described in detail by reference to the drawings. In the following description, a positional relationship in the drawings will be appropriately referred to.

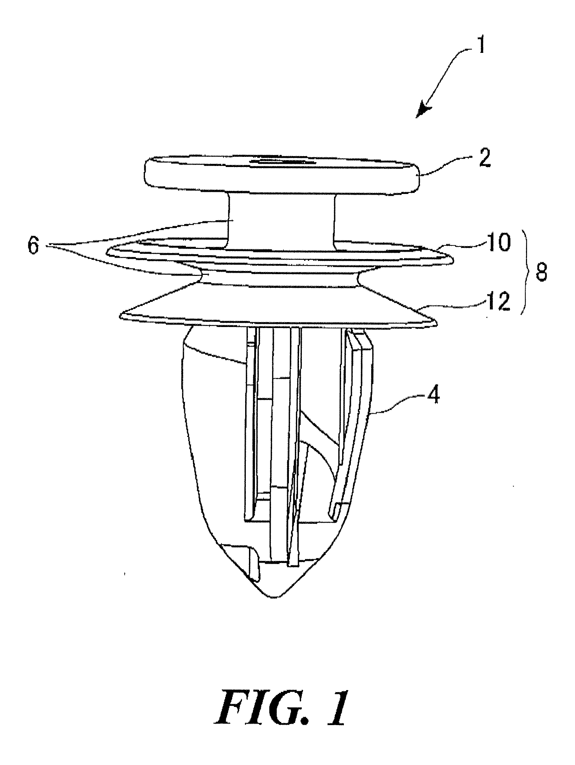

Fig. 1 perspectively a clip according to a first embodiment.
A clip 1 corresponds to the above-described clip, and is used for fixing a trim board (attachment-subject member) to a door panel (attachment-base member). In the clip 1, an annular head portion 2, a swelling leg portion 4, a pillar-shaped shank portion 6 and an annular flange portion 8 are formed integrally from a resin material through injection molding. Although there is imposed no specific limitation on the type of a resin material, a resin having a heat resistance may be preferably used such that wear or deformation hardly occurs. In this embodiment, a polyacetal (POM) resin is adopted.

The flange portion 8 includes a first flange 10 and a second flange 12. These flange portions 10, 12 spread outwards from the shank portion 6. As it will be specifically described later, in the locked state, the clip 1 holds a trim board by the head portion 2 and the first flange portion 10, and holds a door panel by the second flange portion 12 and the leg portion 4, thereby fixing the trim board to the door panel.

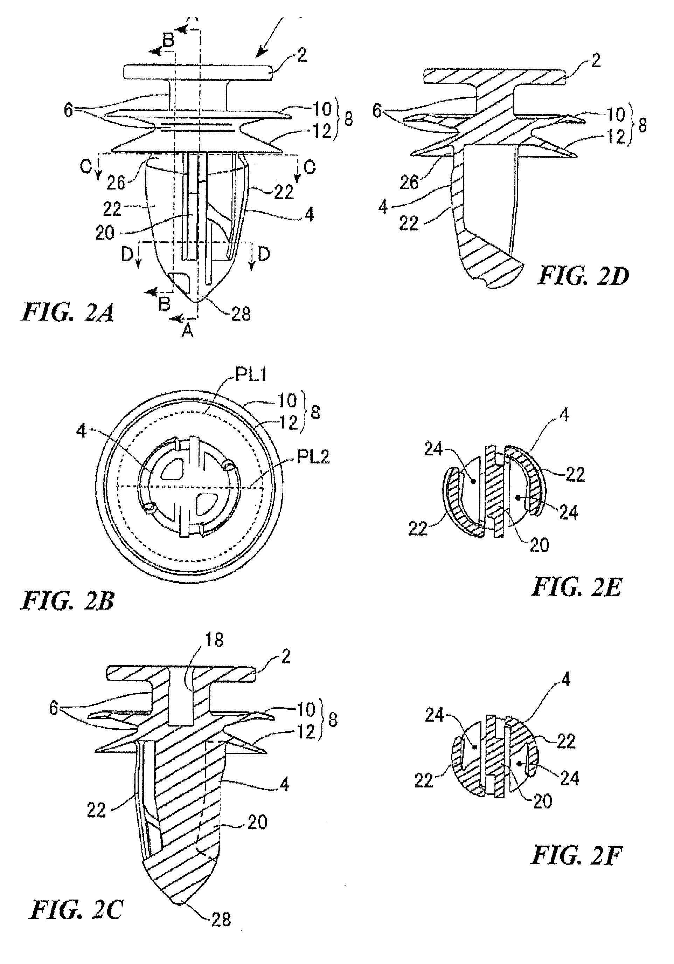

Figs. 2A to 2F show the clip in detail. Fig. 2A shows a front view of the clip 1, Fig. 2B shows a bottom view of the clip 1, Fig. 2C shows a sectional view of the clip 1 taken along the line A-A and seen in a direction indicated by arrows A shown at Fig. 2A, Fig. 2D shows a sectional view of the clip 1 taken along the line B-B and seen in a direction indicated by arrows B-B shown at Fig. 2A, Fig. 2E shows a sectional view of the clip 1 taken along the line C-C and seen in a direction indicated by arrows C shown at Fig. 2A, and Fig. 2F shows a sectional view of the clip 1 taken along the line D-D and seen in a direction indicated by arrows D shown at Fig. 2A.

The head portion 2 has a flat circular disk shape and is provided concentrically at one end of the shank portion 6. As shown in Fig. 2C, a recess portion 18 is formed in the center of the head portion 2. The recess portion 18 extends in an axial direction to a depth reaching the flange portion 8. By providing this recess portion 18, when forming the clip 1, the clip 1 can be stably supported in sprit molds, which will be described later, and can be prevented from being dislocated from the molds when the molds are separated.

As shown in Figs. 2E, 2F, the leg portion 4 includes an pillar-shaped portion 20 that extends in an axis and that has a rectangular sectional shape and a pair of elastic locking portions 22, 22 that each has an are-shaped sectional shape and that are provided on both sides of the pillar-shaped portion 20 so as to make up an outer circumference. The elastic locking portion 22, 22 and the pillar-shaped portion 20 form an S-shaped cross-sectional shape so as to define a space 24 between each of the elastic locking portions 22, 22 and the pillar-shaped portion 20, thereby providing elasticity when the clip 1 is locked on the attachment-base member. As shown in Fig. 2C, the pillar-shaped portion 20 extends downwards from the flange portion 8, and has a tapered shape in which its cross section is gradually reduced towards a distal end thereof.

As shown in Fig. 2A, the elastic locking portions 22, 22 are connected to the flange portion 8 via a diametrically-contracted portion 26 that is contracted in a radial direction. Namely, each elastic locking portion 22 gradually expands diametrically from the diametrically-contracted portion 26 and then gradually contracts diametrically to form a distal end 28. The shape of the leg portion 4 is not limited to the above-described shape, as long as the leg portion 4 can be to be inserted and locked in an attachment hole of the attachment-base member.

The flange portion 8 includes the first flange 10 and the second flange 12. As shown in Fig. 2D, the first flange portion 10 has a skirt shape that expands slightly obliquely upwards towards the head portion 2. The second flange 12 has a skirt shape that expands slightly downwards towards the shank portion 6. In this embodiment, as shown in the drawings, an outside diameter of the first flange portion 10 is made larger than an outside diameter of the second flange portion 12. However, a first flange portion and a second flange portion may be formed in a reverse relationship or formed to have the same size.

As shown in Fig. 2B in particular, an annular parting line PL1 is formed on a lower surface (leg-portion-4-facing surface) of the second flange 12. The parting line PL1 is an uneven (projection) that extends along a boundary surface between the split molds in an injection molding. Another radially-extending parting line PL2 is also formed inwards of the parting line PL1. These parting lines are inevitably formed when a clip is formed using dividable sprit molds, and the details thereof will be described later.

Next, an apparatus and a method for manufacturing the clip will be described.

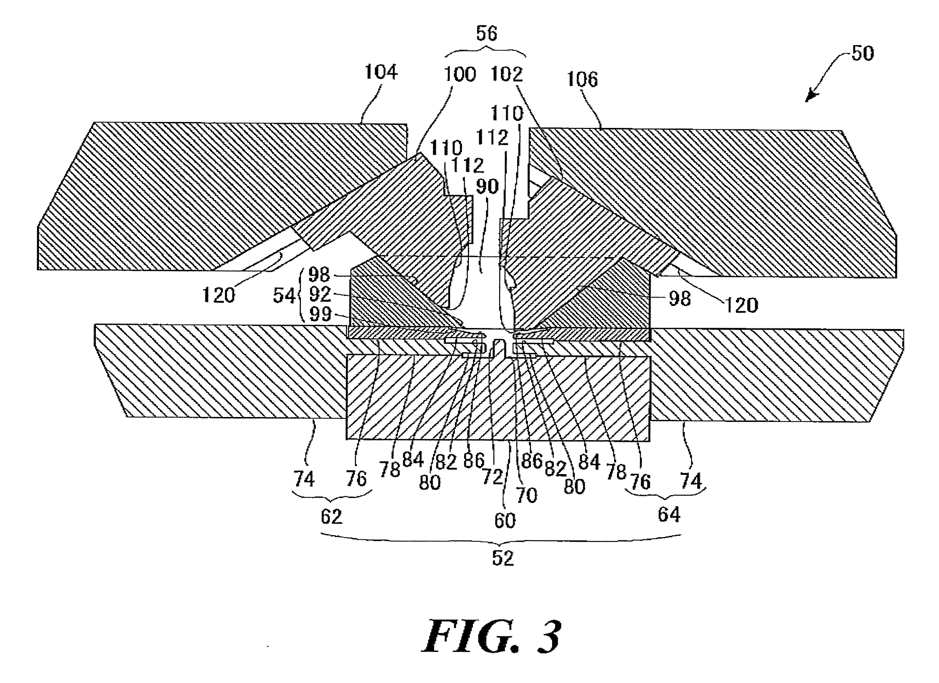

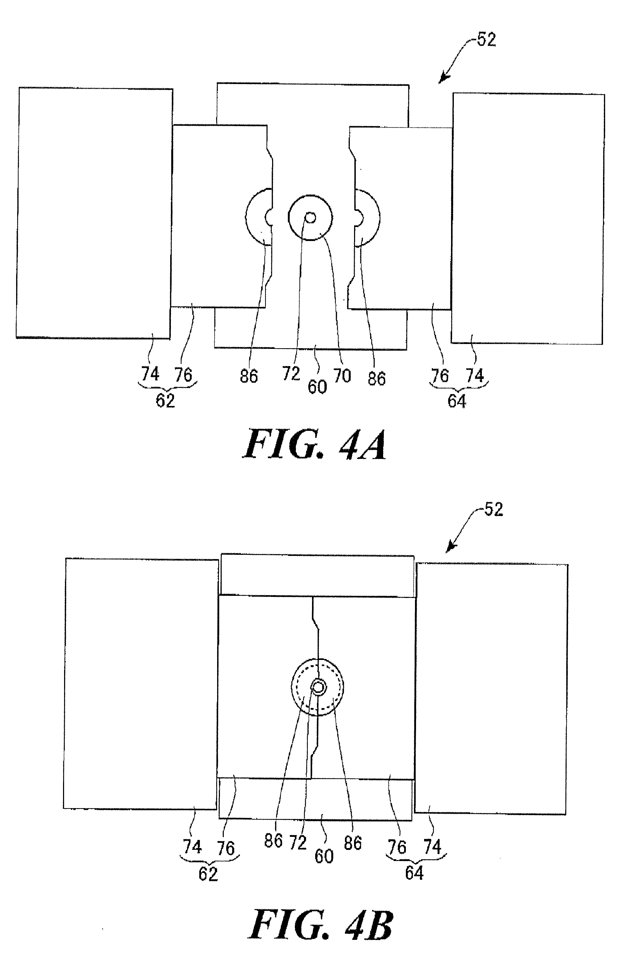

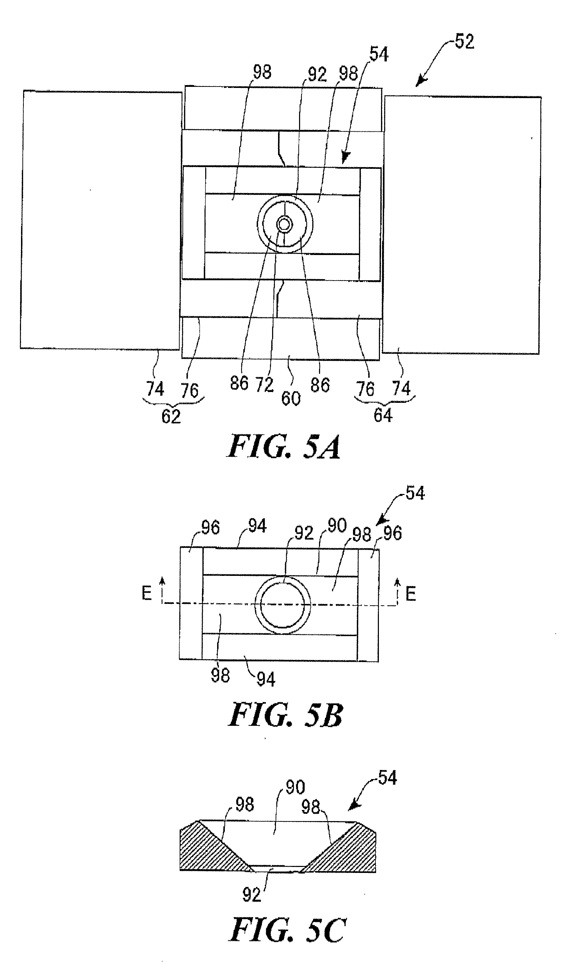

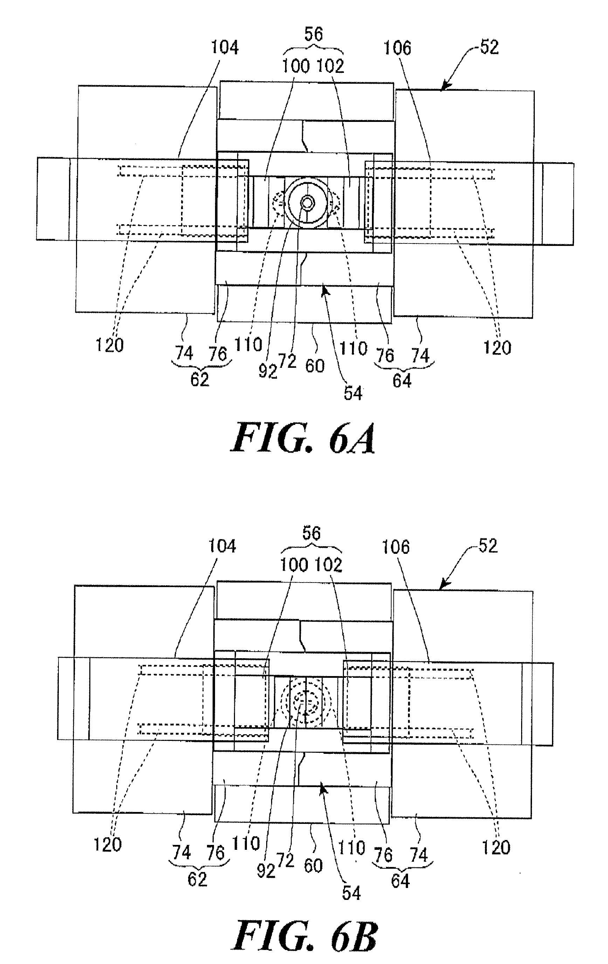

Fig. 3 exemplarily shows a manufacturing apparatus of the clip. Figs. 4A and 4B show a first mold from above. Fig. 4A shows a state in which left and right molds are opened, and Fig. 4B shows a state in which the left and right molds are closed. Figs. 5A to 5C show a second mold. Fig. 5A shows a state in which the second mold is set in the first mold, Fig. 5B shows a plan view of the second mold, and Fig. 5C shows a sectional view thereof taken along the line E-E and seen in a direction indicated by arrows E shown at Fig. 5B. Figs. 6A and 6B show the molds in whole. Fig. 6A shows a state in which a third mold is opened, and Fig. 6B shows a state in which the third mold is closed.

The clip 1 can be manufactured through an injection molding using a manufacturing apparatus 50 shown in Fig. 3. The manufacturing apparatus 50 includes a first mold 52, a second mold 54 and a third mold 56. The first mold 52 is made up of horizontally-dividable split molds, and forms the head portion 2, the shank portion 6 and part of the flange portion 8 that are shown in Figs. 1 and 2A to 2F. The second mold 54 is configured as an integral mold having no dividable portions and forms part of the flange portion 8 in cooperation with the first mold 52. The third mold 56 is made up of horizontally-dividable split molds, and forms part of the flange portion 8 in cooperation with the first mold 52, also forming the leg portion 4.

As shown in Figs. 3 and 4A, 4B, the first mold 52 includes a base portion 60 that is fixed to an apparatus main body, not shown, and a first movable mold 62 and a second movable mold 64 which make up a pair of split molds provided so as to hold the base portion 60 therebetween from the left and right thereof. A circular annular groove 70 is provided in the center of the base portion 60, and a circular boss-shaped supporting projection 72 is erected in the center of the annular groove 70. The annular groove 70 is a mold portion that forms a first surface (leg-portion-4-opposite surface) of the head portion 2, and the supporting projection 72 is a mold portion that forms the recess portion 18 in the head portion 2.

The first movable mold 62 includes a movable main body 74 and a spacer 76. The movable main body 74 has at an upper portion thereof a plate-shaped mold forming portion 78 that extends towards the supporting projection 72, and the spacer 76 is joined to an upper surface of the mold forming portion 78. In this embodiment, the spacer 76 has a rectangular plate shape and is fixed to the mold forming portion 78 with a fastening member (screw), not shown.

The movable main body portion 74 is driven in directions in which it moves towards and away from the base portion 60, and as this occurs, a lower surface of the mold forming portion 78 slides over an upper surface of the base portion 60. A semi-circular annular groove 80 is provided on a lower surface of a distal end portion of the mold forming portion 78 and makes up a mold portion that molds a second surface (leg-portion-4-facing surface) of the head portion 2. A semi-circular annular groove 82 is also provided on an upper surface of the distal end portion of the mold forming portion 78 and makes up a mold portion that molds a first surface (leg-portion-4-opposite surface) of the first flange 10.

A semi-circular annular groove 84 is provided on a lower surface of a distal end portion of the spacer 76 and makes up a mold portion that molds a second surface (leg-portion-4-facing surface) of the first flange portion 10. A semi-circular annular groove 86 is formed on an upper surface of the distal end portion of the spacer 76 and makes up a mold portion that molds a first surface (leg-portion-4-opposite surface) of the second flange 12. The second movable mold 64 has the same configuration as that of the first movable mold 62. Hence, like reference numerals are given to like constituent portions to those of the first movable mold 62, and the description thereof is omitted. As shown in Fig. 4B, when the first movable mold 62 and the second movable mold 64 are assembled together, the semi-circular annular grooves are combined together into a circular annular groove so as to mold annular portions.

As shown in Figs. 3 and 5A to 5C, the second mold 54 is constructed so as to slidably-support and lock the third mold 56. As shown in Fig. 5B, in the second mold 54, a guide hole 90 is provided so as to penetrate through a rectangular parallelepiped main body from an upper surface to a lower surface. The guide hole 90 has a rectangular shape at an upper end portion thereof and is formed into a circular exposing hole 92 through which a central portion of the first mold 52 is exposed at a lower end portion thereof. Namely, the main body of the second mold 54 has a pair of guide walls 94 and a pair of guide walls 96, and the guide hole 90 is defined inside these guide walls. The guide walls 94 constitute vertical surfaces relative to the spacers 76 of the first mold 52, and the guide walls 96 form sloping surfaces 98 that slope down towards the spacers 76. The second mold 54 is assembled to the first mold 52 by a driving mechanism, not shown, after the first mold 52 has been assembled.

Returning to Fig. 3, in the second mold 54, an inside diameter of a lower end opening portion of the exposing hole 92 is smaller than an outside diameter of the second flange 12, and a first-mold-52-facing surface (spacers-76-facing surface) outwards of the exposing hole 92 makes up a mold portion that forms an outer circumferential edge portion of the second flange 12. Namely, a central portion of a lower end surface of the second mold 54 constitutes a molding portion 99. The molding portion 99 forms a predetermined range of the second flange 12 that extends inwards from an outer circumferential edge thereof.

As shown in Figs. 3 and 6A, 6B, the third mold 56 includes a first movable mold 100 and a second movable mold 102 that make up a pair of split molds provided above the second mold 54. The first movable mold 100 and the second movable mold 102 are supported slidably by a pair of sliders 104, 106, respectively and have mold portions that form the leg portion 4 on facing surfaces (mating surfaces) thereof.

The first movable mold 100 has a molding portion 110 that forms the leg portion 4 at a lower half portion thereof. A lower end surface of the first movable mold 100 constitutes a molding portion 112 that forms the second surface (leg-portion-4-facing surface) of the second flange 12 in cooperation with the first mold 52. Similarly, the second movable mold 102 has a molding portion 110 that forms the leg portion 4 at a lower half portion thereof. A lower end face of the second movable mold 102 constitutes a molding portion 112 that forms the second surface (leg-portion-4-facing surface) of the second flange 12 in cooperation with the first mold 52.

The sliders 104, 106 are driven parallel to an upper surface of the first mold 52 (driven horizontally) by a driving device, not shown, so as to move towards or away from the second mold 54. Guide rails 120 are provided on the slider 104 so as to extend obliquely relative to the upper surface of the first mold 52, and the first movable mold 100 is supported so as to move upwards or downwards along the guide rails 120. Similarly, guide rails 120 are also provided on the slider 106 so as to extend obliquely relative to the upper surface of the first mold 52, and the second movable mold 102 is supported so as to move upwards or downwards along the guide rails 120. The first movable mold 100 and the second movable mold 102 are driven along the respective guide rails by a driving device, not shown.

In the above-described configuration, by driving the sliders 104, 106 towards the second mold 54, the first movable mold 100 and the second movable mold 102, that is the mating surfaces thereof are moved towards each other (so as to form the third mold 56). At the same time, the first movable mold 100 is driven relative to the slider 104, and the second slider 102 is driven relative to the slider 106, whereby these movable molds 100, 102 descend while sliding down along the sloping surfaces 98 of the second mold 54, thereby being assembled to the second mold 54. When the third mold 56 is assembled to the second mold 54 in this way, the molding portions 112 of the third mold 56 and the molding portions 99 of the second mold 54 form a continuous surface at a boundary therebetween to thereby make up a molding portion that forms the second surface (leg-portion-4-facing surface) of the second flange 12.

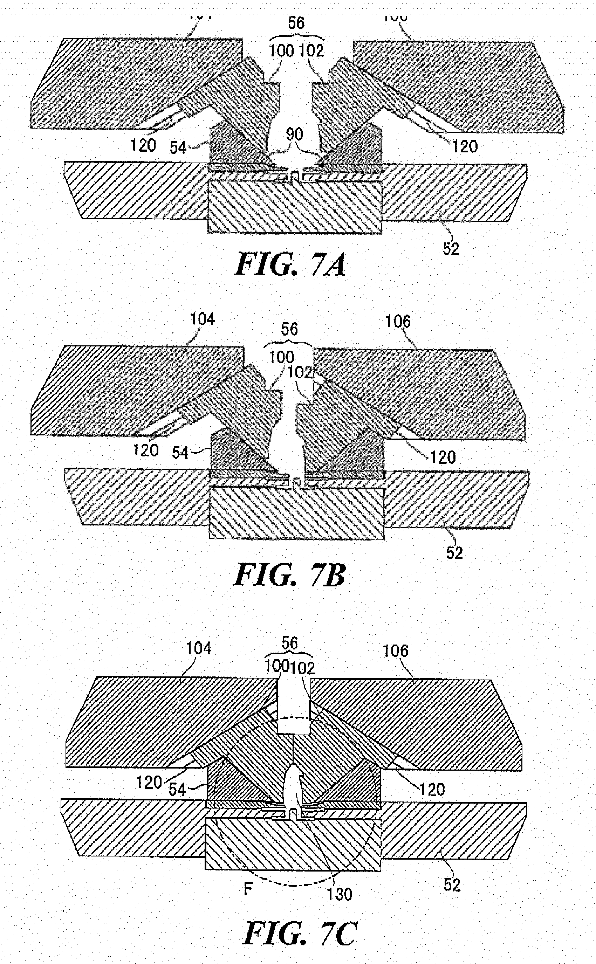

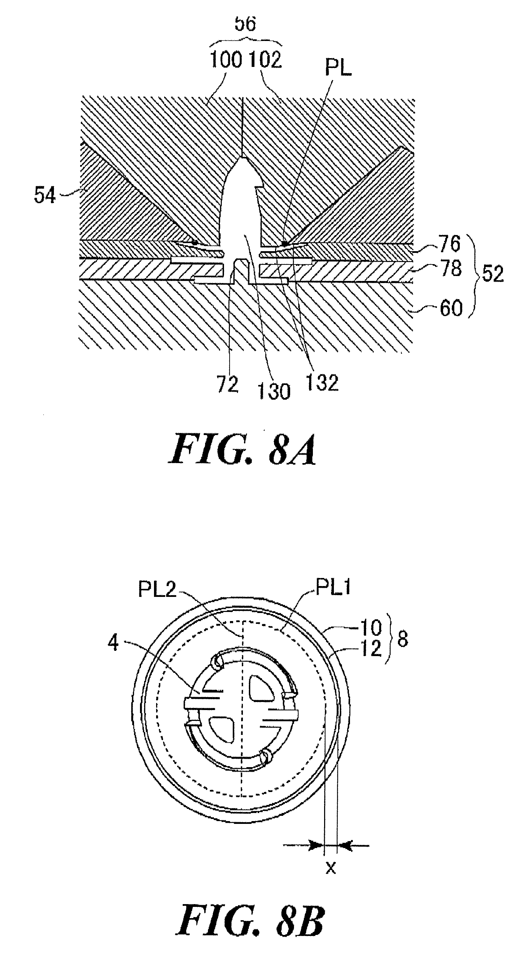

Figs. 7A to 7C exemplarity show an assembling process of the molds. Figs. 8A and 8B show a clip that is formed by the manufacturing apparatus in detail. Fig. 8A is an enlarged view of a portion F in Fig. 7C, and Fig. 8B is a bottom view of the clip obtained by injection molding.

As shown in Figs. 7A and 7B, the molds are all assembled together as shown in Fig. 7C by driving sequentially the sliders 104, 106, the first movable mold 100 and the second movable mold 102. In this way, a cavity 130 that follows an external shape of the clip 1 is formed. Although not shown, an injection path is formed in the cavity 130 through which a resin material for injection molding is injected. Then, by injecting a resin material through an injection apparatus, not shown, the clip 1 integrally having the head portion 2, the leg portion 4, the shank portion 6 and the flange portion 8 can be obtained.

As this occurs, as shown in Fig. 8A, the second mold 54 and the third mold 56 form the continuous surface 132 at the boundary therebetween, and the second flange 12 is formed by the continuous surface 132 and the spacers 76 which face each other. Since a boundary line PL between the second mold 54 and the third mold 56 that form the continuous surface 132 is formed into a circular shape, an annular parting line is formed along the boundary line PL on the clip 1.

Namely, as shown in Fig. 8B, an annular parting line PL1 is formed along the boundary line PL on the leg-portion-4-facing surface of the second flange 12. No other parting line is formed radially outwards of the parting line PL1 by setting the position, shape and dimension of the boundary line PL between the second mold 54 and the third mold 56. On the other hand, another parting line PL2 extending radially inwards is formed inwards of the annular parting line PL1 on the leg-portion-4-facing surface of the second flange 12. This parting line PL2 is formed along a boundary line between the first movable mold 100 and the second movable mold 102 of the second mold 54.

The parting line PL1 is formed on the second flange 12 in a position lying a predetermined length x inwards from an outer circumferential edge of the second flange 12. Because of this, an annular sealing portion that surrounds the parting line PL1 is ensured over a predetermined range lying outwards of the parting line PL1 on the second flange 12. Namely, this predetermined distance x is set such that an annular sealing surface which abuts with an attachment-base member such as a door panel in a fluid-tight fashion is formed between the outer circumferential edge of the second flange 12 and the parting line PL1.

Next, a specific application of the clip 1 will be described.

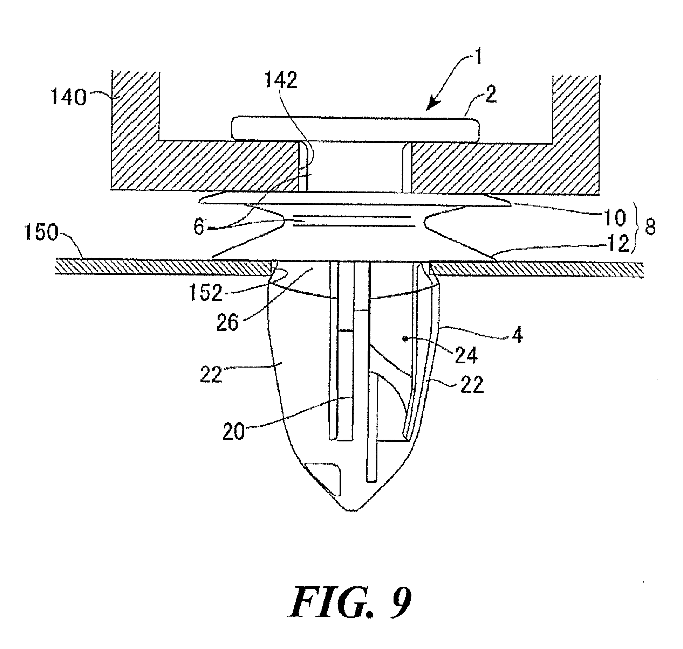

Fig. 9 shows an application example of the clip.
For example, the above-described clip 1 is used in fixing a trim board 140 as an attachment-subject member to a door panel 150 as an attachment-base member. Namely, the top portion 2 of the clip 1 is firstly engaged with an attachment hole 142 of the trim board 140, and the head portion 2 is retained so that the trim board 140 is held by the head portion 2 and the first flange 10 therebetween. For example, as shown in Fig. 2 of Patent Literature 1, the attachment hole 142 is formed into a keyhole-like shape that is made up of a large hole having a diameter larger than that of the head portion 2 and a small hole that extends from the large hole and which has a diameter smaller than that of the head portion 2. Because of this, by inserting the head portion 2 of the clip 1 through the large hole and thereafter moving the shank portion 6 into the small hole, it is possible to cause the head portion 2 to engage with the attachment hole 142.

When the leg portion 4 of the clip 1 is pushed into an attachment hole 152 of the door panel 150 in this state, the elastic locking portions 22 of the leg portion 4 are inserted into the attachment hole 152 while being contracted diametrically by the spaces 24, and are elastically restored after the spaces 24 have passed through. As this occurs, the diametrically-contracted portion 26 is positioned in the attachment hole 152, whereby the clip 1 is fixed to the door panel 150 such that the door panel 150 is held by the leg portion 4 and the second flange 12 therebetween. Then, the lower surface (leg-portion-4-facing surface) of the second flange 12 elastically abuts with a front surface of the door panel 150.

As this occurs, since no other parting line is formed outwards of the annular parting line PL1 on the lower surface of the second flange 12, the lower surface of the second flange 12 constitutes a sealing surface to thereby be closely attached to the front surface of the door panel 150. Thus, a high sealing performance is realized on the inside and outside of the attachment hole 152 of the door panel 150. Namely, it is possible to prevent effectively the intrusion of water or air from a door panel 150 side to a trim board 140 side.

The invention is not limited to the above-described embodiment, and it is possible to make modifications such as various design changes to the embodiment based on the knowledge of the skilled person, embodiments with such modifications will also fall within the scope of the invention.

In the above-described embodiment, as shown in Fig. 1, the flange portion 8 including the first flange 10 and the second flange 12 is exemplified. However, for example, a first flange 10 may be omitted. In this case, an attachment-subject member may be held between a head portion 2 and a second flange 12.

In the embodiment, the trim board is exemplified as the attachment-subject member, and the door panel is exemplified as the attachment-base member. However, the invention can be applied to other attachment-subject members and other attachment-base members by appropriately altering the shape and dimensions of the clip 1.

### Description of Reference Numerals and Characters

1 Clip; 2 Head portion; 4 Leg portion; 6 Shank portion; 8 Flange portion; 10 First flange; 12 Second flange; 50 Manufacturing apparatus; 52 First mold; 54 Second mold; 56 Third mold; 60 Base portion; 62 First movable mold; 64 Second movable mold; 70 Annular groove; 72 Supporting projection; 74 Movable main body; 76 Spacer; 78 Mold forming portion; 80, 82, 84, 86 Annular groove; 90 Guide hole; 92 Exposing hole; 94, 96 Guide wall; 98 Sloping surface; 99 Molding portion; 100 First movable mold; 102 Second movable mold; 104, 106 Slider; 110, 112 Molding portion; 120 Guide rail; 130 Cavity; 140 Trim board; 142 Attachment hole; 150 Door panel; 152 Attachment hole; PL1, PL2 Parting line.

## Claims

1. A clip manufacturing apparatus for forming a clip through injection molding of resin, the clip comprising:
a head portion that is engaged with an attachment-subject member;
a leg portion, that is inserted and locked in an attachment hole of an attachment-base member to which the attachment-subject member is to be fixed;
a shank portion that connects the head portion with the leg portion; and
a flange portion that spreads obliquely outwards from the shank portion towards the leg portion and closely attached to the attachment-base member so that an outer circumferential edge portion of a leg-portion-facing surface of the flange portion surrounds the attachment hole when attached to the attachment-base member, the clip manufacturing apparatus comprising:
a first mold that forms a first surface side of the flange portion corresponding to a head-portion-facing surface of the flange portion;
a second mold that forms a second surface side of the flange portion corresponding to the leg-portion-facing surface of the flange portion; and
a third mold that forms the leg portion,
wherein the second mold is configured as an integral mold having no dividable portion and has an opening portion that is smaller than an outside diameter of the flange portion, a first-mold-facing surface of the second mold forming a predetermined range of the flange portion that extends inwards from an outer circumferential edge thereof.

2. The clip manufacturing apparatus of Claim 1,
wherein the second mold and the third mold form a continuous surface at a boundary therebetween by being assembled together,
wherein the flange portion is formed by the continuous surface and a surface of the first mold facing thereto, and
wherein a boundary line between the second mold and the third mold is formed into an annular shape.

3. The clip manufacturing apparatus of Claim 2,
wherein mating surfaces of the second mold and the third mold are made obliquely relative to the continuous surface, and
wherein the third mold is made up of a plurality of dividable split molds, the split molds being assembled to the second mold so as to slide obliquely along the mating surfaces.

4. A clip manufacturing method for forming a clip through injection molding of resin, the clip comprising:
ahead portion that is engaged with an attachment-subject member;
a leg portion that is inserted and locked in an attachment hole of an attachment-base member to which the attachment-subject member is to be fixed;
a shank portion that connects the head portion with the leg portion; and
a flange portion that spreads obliquely outwards from the shank portion towards the leg portion and closely attached to the attachment-base member so that an outer circumferential edge portion of a leg-portion-facing surface of the flange portion surrounds the attachment hole when attached to the attachment-base member, the clip manufacturing method comprising:
assembling together a first mold that forms a first surface side of the flange portion corresponding to a head-portion-facing surface, a second mold configured as an integral mold having no dividable portion and configured to form a second surface side of the flange portion corresponding to the leg-portion-facing surface and a third mold that forms the leg portion, the second mold having an opening portion that is smaller than an outside diameter of the flange portion, a first-mold-facing surface of the second mold that lies outwards of the opening portion forming a predetermined range of the flange portion that extends inwards from an outer circumferential edge thereof; and
injecting a resin material into a cavity that is defined by the first mold, the second mold and the third mold.

5. A clip comprising:
a head portion that is engaged with an attachment-subject member;
a leg portion that is inserted and locked in an attachment hole of an attachment-base member to which the attachment-subject member is to be fixed;
a shank portion that connects the head portion with the leg portion; and
a flange portion that spreads obliquely outwards from the shank portion towards the leg portion and closely attached to the attachment-base member so that an outer circumferential edge portion of a leg-portion-facing surface of the flange portion surrounds the attachment hole when attached to the attachment-base member,
wherein the head portion, the leg portion, the shank portion and the flange portion are formed integrally from a resin material through an injection molding using a plurality of molds, an annular parting line that extends along a boundary surface between the molds is formed on the leg-portion-facing surface of the flange portion, and no other parting line is formed radially outwards of the annular parting line.

6. The clip of Claim 5,
wherein, when the clip is attached to the attachment-base member, the annular parting line lies at a predetermined distance radially inwards from an outer circumferential edge of the flange portion so that an annular sealing surface is formed between the outer circumferential edge of the flange portion and the parting line so as to abut with the attachment-base member in a fluid-tight fashion.

7. The clip of Claim 6,
wherein another radially-extending parting line is formed inwards of the annular parting line on the leg-portion-facing surface of the flange portion.
